# EUROPEAN PATENT APPLICATION

(11) **EP 4 057 116 A1**
(43) Date of publication of application: **14.09.2022**
(21) Application number: 21161549.7
(22) Date of filing: 09.03.2021
(51) Int. Cl.: G06F 3/041, G06F 3/0488

(54) **METHOD FOR BIOMETRICALLY OPTIMIZING A VIRTUAL KEYBOARD**

(71) Applicant: Adatype AB, 365 93 Furuby (SE)
(72) Inventor: KROT, Andrii, 365 93 Furuby (SE); DOMIN, Iaroslav, 365 93 Furuby (SE); LIN, Xinyi, 365 93 Furuby (SE)
(74) Representative: AWA Sweden AB

(57) **Abstract**

A method for biometrically optimizing a virtual keyboard (80;90) on a touch sensitive surface (200) for a user is provided. The method comprises determining a respective finger reach for each of a plurality of fingers (10) of the user by a biometrical measurement procedure. The biometrical measurement procedure comprises, for each respective finger (10), measuring the finger reach based on detecting a finger-reach gesture (18;19) with a fingertip (11) of the finger (10) around a respective point (14) on the touch sensitive surface (200). The method further comprises calculating a set of geometrical parameters defining the virtual keyboard (80;90) based on the biometrical measurement procedure. The method further comprises rendering the virtual keyboard (80;90) on the touch sensitive surface (200) based on the set of geometrical parameters.

## Description

### TECHNICAL FIELD

The present disclosure relates to a method for biometrically optimizing a virtual keyboard on a touch sensitive surface for a user.

### BACKGROUND

Touch-sensitive surfaces configured to present a user with a virtual keyboard on said surface are becoming increasingly common in daily and professional life, for example on smartphones, tablets, automotive interfaces, vending machines, number pads, game controllers, or the like.

Biometrically optimizing such a virtual keyboard, i.e., adapting specifics of the keyboard, such as its geometry, based on measurements of the user's body, such as their hands and/or fingers, is known in the prior art.

There is always a need to improve such methods.

### SUMMARY

To this end, there is provided a method for biometrically optimizing a virtual keyboard on a touch sensitive surface for a user, said method comprising determining a respective finger reach for each of a plurality of fingers of said user by a biometrical measurement procedure comprising, for each respective finger, measuring said finger reach based on detecting a finger-reach gesture with a fingertip of said finger around a respective point on said touch sensitive surface; calculating a set of geometrical parameters defining said virtual keyboard based on said biometrical measurement procedure; rendering said virtual keyboard on said touch sensitive surface based on said set of geometrical parameters.

Thus, a method is provided for biometrically optimizing a virtual keyboard on a touch sensitive surface to a user by measuring a reach of a number of fingers of the user. The method may be a computer-executable method performed on a computer-executable medium such as a PC, a tablet, a smartphone, or the like. Through calculating the set of geometrical parameters defining the virtual keyboard based on the biometrical measurement procedure and rendering the virtual keyboard on the touch sensitive surface based on the set of geometrical parameters, the virtual keyboard may be further adapted to the fingers of the user, allowing for increased accuracy and typing speed on the virtual keyboard.

The measuring the finger reach based on the detecting of a finger-reach gesture with a fingertip of said finger around a respective point on the touch sensitive surface allows for a thorough measurement of the finger reach in two dimensions on the touch-sensitive surface, thereby enabling the rendering of a virtual keyboard having suitable spacings between both rows and columns of individual virtual keys, and/or suitable sizes of the individual virtual keys.A further advantage is that the user may rapidly find a comfortable and ergonomically pleasing typing position. Commonly occurring typing-related issues such as, e.g. a repetitive strain injury or the like may thereby be prevented.

According to an embodiment, said finger-reach gesture may comprise a tapping movement with the respective fingertip around said respective centered touching point.

This provides a fast and accurate measurement of the respective finger. This further provides an accurate measurement of a respective fingertip in any direction on the touch sensitive surface with respect to its associated point.

According to an embodiment, said finger-reach gesture may comprise a sliding movement with the respective fingertip around said respective point.

This improves accuracy when measuring the reach of a finger, due to provision of a continuous path traced by the finger. A further advantage is that such a sliding gesture is fast and convenient.

According to an embodiment, the point for each respective finger may be defined based on said user holding the hand in a neutral position above said touch-sensitive surface.

This advantageously prevents fatigue of the wrists of the user and other possible typing related issues. By measuring the finger reach while holding the wrist associated with the finger in question substantially straight further enhances provision of an ergonomically adapted virtual keyboard. This allows, after rendering the virtual keyboard, the user to achieve a relatively high number of typed words per minute (WPM), as a faster typist generally holds the wrists substantially static during typing.

According to an embodiment, the method may further comprise, after said rendering, for each character in a text typed by said user, detecting a keystroke coordinate on said touch sensitive surface; based on said detecting of each said keystroke coordinate for each said character, for each virtual key, calculating a statistical parameter of the keystroke coordinates associated with said virtual key; calculating a correction to said set of geometrical parameters defining said virtual keyboard based on the statistical parameter associated with each respective virtual key.

This allows a fine-tuning of the geometrical parameters defining the virtual keyboard, which further enhances the typing comfort and typing speed of the user. After such a fine-tuning, the virtual keyboard retains a substantially symmetrical appearance to the user, further enhancing typing speed and accuracy.

According to an embodiment, said statistical parameter is an average.

An average coordinate of respective virtual key enables a set of coordinates used to determine a fine-tuning of the geometrical parameters defining the virtual keyboard.

According to an embodiment, the method may further comprise, after said determining, and before said calculating of said set of geometrical parameters: measuring a plurality of fingertip touching points with said user holding each hand on said touch-sensitive surface in an initial typing position wherein said calculating of said set of geometrical parameters further is based on said measuring of said plurality of fingertip touching points.

This allows determining an optimal angle between the forearms of the user, enhancing ergonomics.

According to an embodiment, said set of geometrical parameters may describe said virtual keyboard being divided into a first virtual keyboard section and a second virtual keyboard section, said first virtual keyboard section being associated with a first hand of said user, and said second virtual keyboard section being associated with a second hand of said user.

By such a division, the virtual keyboard may be further optimized for typing in an anatomically pleasing typing position by, e.g. preventing unnecessary bending of respective wrist of the user. The first virtual keyboard section and the second virtual keyboard section may be angled relative to each other such that the respective wrist of the user may be held substantially static and straight during typing, further enhancing typing speed and accuracy, saving time and thereby electrical power. Unnecessary fatigue of respective wrist is further prevented.

According to an embodiment, said geometrically disjoining said set of geometrical parameters describe a curvature for each row of said virtual keyboard.

Such a curvature naturally accounts for a length difference between the fingers of a user, facilitating reaching all of the plurality of keys of the virtual keyboard while keeping the wrists substantially straight and static. Thereby, typing performance is enhanced as well as preventing typing errors, saving time and electrical power.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

### BRIEF DESCRIPTION OF THE FIGURES

The above, as well as additional objects, features and advantages of the present invention, will be better understood through the following illustrative and non-limiting detailed description of preferred embodiments, with reference to the appended drawings, where the same reference numerals will be used for similar elements, wherein:
Fig. 1 shows a flow chart of an example embodiment of the method.
Fig. 2 schematically shows an example of a measurement of a finger reach by a tapping movement of the index finger of a user.
Fig. 3 schematically shows an example of a measurement of a finger reach by a sliding movement of the index finger of the user.
Fig. 4 shows an example of the right hand of the user held in a neutral position.
Fig. 5 schematically shows measurements of a plurality of finger reaches by after the user has performed both a tapping movement and a sliding movement of a respective fingertip of the right hand.
Fig. 6 shows an example of a heatmaps from a plurality of touching points associated with a respective virtual key.
Fig. 7 shows a visual virtual keyboard and its corresponding control space.
Fig. 8A shows a non-staggered virtual keyboard layout.
Fig. 8B shows a staggered virtual keyboard layout.

### DETAILED DESCRIPTION

Throughout this disclosure, the term virtual keyboard refers to a keyboard with a reconfigurable layout displayed on a touch-sensitive surface and configured to sense a touch or press by a finger of a user and interpret the touch or press as positional input to the computing device. It may have a QWERTY, Dvorak, or any other suitable layout.

The touch sensitive surface may be any surface configured to detect or sense a touch or press by a finger of a user and detect the location of that touch or press as a positional input signal.

Particularly, the touch sensitive surface may determine a location of an interface region between a fingertip of a user and the touch sensitive surface. Sensing such a touch and determining such a location of a fingertip may be obtained using any of a variety of known technologies. By way of example, touch sensitive surfaces may include pressure sensing surfaces, capacitance-sensing surfaces, and induction-sensing services which directly detect a touch by a user. Furthermore, optical sensors may recognize when a fingertip touches the touch sensitive surface.

The touch sensitive surface may preferably, but not necessarily, used in combination with a display, such as a physical display on a tablet or smartphone.

However, even a table, a car window, or any flat or curved surface may serve as a touch sensitive surface. In that case, or otherwise, the virtual keyboard may be displayed using projector-based techniques enabling an image of a virtual keyboard on the touch-sensitive surface.

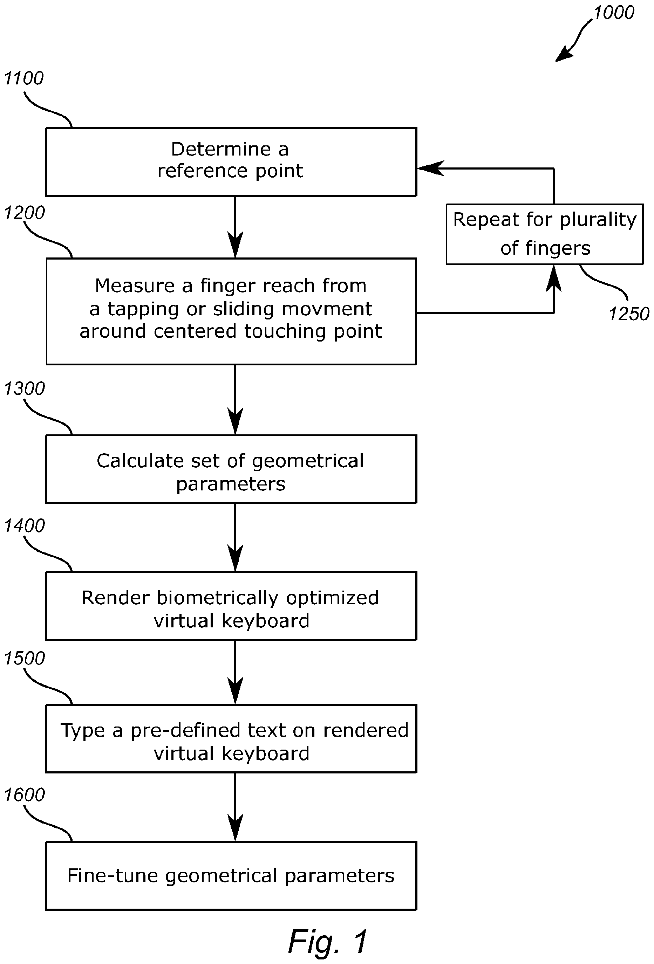

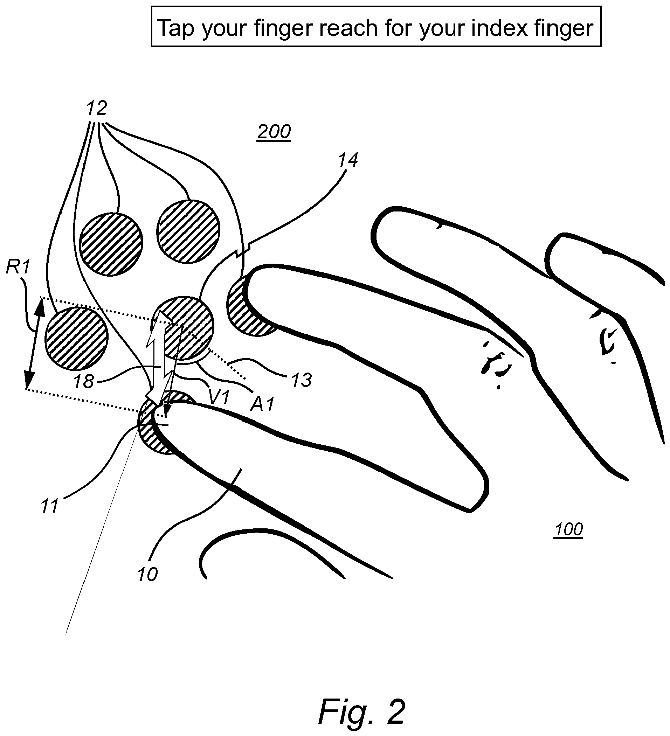

Fig. 1 shows a flow chart of an example embodiment 1000 of the method according to the present disclosure, which may be implemented on a touch-sensitive surface 200 (cf. Figs 2-8B). The touch-sensitive surface 200 may form part of a display.

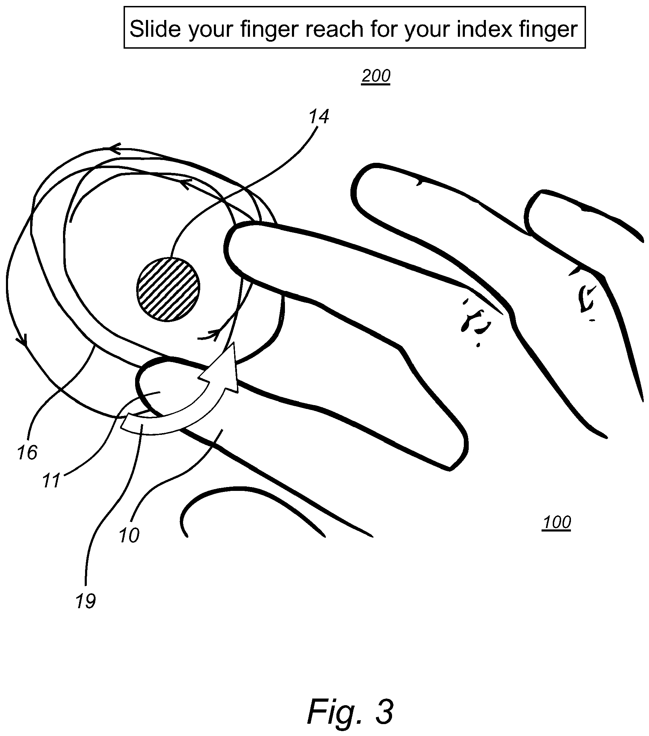

At 1100, with further reference to Figs 2 and 3, a measurement reference point 14 may optionally be defined. The reference point may be displayed at the touch-sensitive surface 200. For example, the reference point 14 for each respective finger 10 may be defined based on the user holding the hand in a neutral position above the touch-sensitive surface and the touch-sensitive surface 200 detecting the location of each fingertip in the neutral position. The reference point 14 for each respective finger 10 is may then be understood as a point or a region that may be substantially centered with respect to a circumferential reach of respective finger as the user types on the keyboard, and may thus be regarded as a touch-center point.

The reference point 14 for each respective finger 10 may be shown on the touch-sensitive surface 200, or alternatively, not be visible on the touch-sensitive surface. The wording "for each respective finger" may refer to all fingers of a hand of a user. "For each respective finger" may alternatively refer to at least one finger of a hand of the user. The method is thereby not limited to a specific number of fingers to be used upon performing a biometrical measurement procedure. By way of example, the pinky finger may be excluded when determining a respective finger reach for each of a plurality of fingers of said user.

The user may be prompted to either tap 18 (Fig. 2) or slide 19 (Fig. 3) a finger 10 around point on the touch-sensitive surface 200 by performing a finger-reach gesture 18;19 with a fingertip 11 of the finger 10 around the point 14 on the touch-sensitive surface 200.

The point may correspond to the reference point 14 at 1100 above.

Alternatively, the point may be implied by the finger-reach gesture 18;19. In particular, the position of the point may be determined based on the finger-reach gesture at determined at 1200 below.

At 1200, the reach of the finger 10 is determined by a biometrical measurement procedure comprising detecting the finger-reach gesture 18; 19 using the touch-sensitive display, as will be detailed and exemplified below.

Fig. 2 shows a portion of the right hand 100 of a user when performing a tapping finger-reach gesture 18 to determine a reach of the index finger 10 of the right hand 100 of the user. The reach of the index finger 10 is measured by detecting a tapping movement 18 by the user including tapping a plurality of index-finger tapping points 12 around a point, which may be the reference point 14 on the touch sensitive surface 200.

The point 14 maybe located in an interface region between the touch sensitive surface and a fingertip associated with the respective reference point 14.

An average position of the area of the interface region may be taken as the center of mass of the area of the interface region. The same applies for the plurality of index-finger tapping points 12.

The tapping movement 18 may be measured with the finger 10 performing a plurality of revolutions around the point 14 and in any angular direction with respect to the point 14. The movement around the point 14 may be measured when the right hand 100 is held in a position such that the index finger 10 is slightly bent. The degree of bending of the index finger 10 may be similar to when the hand of a touch typist is placed on a set of home keys 870 of a normal physical keyboard. This allows the index finger 10 to reach a substantial distance R1 in any direction A1 around the centered index-finger touching point 14. The substantial distance R1 in any direction A1 includes a vector V1 between a touching point 12 and the centered index-finger touching point 14. The vector V1 may have a length that corresponds to the substantial distance R1 and an angular component A1. The angular component A1 may be defined relative to any fixed reference axis 13 intersecting the point 14. However, the tapping movement 18 is not necessarily circular or elliptic.

The tapping movement 18 may be measured with the user maintaining the wrist of the right hand 100 substantially straight and static during the tapping movement 18.

As an alternative to Fig. 2, Fig. 3 shows a sliding finger-reach gesture comprising a sliding movement 19 with the index finger 10 of the right hand 100 of the user. Here, the reach of the index finger 10 is measured by detecting the sliding movement 19 performed by the user around the point 14 at the touch sensitive surface 200.

The sliding movement 19 may be measured with the finger 10 performing a plurality of revolutions around the point 14 and in any angular direction. The point 14 may be determined as previously described. The index finger 10 traces an index-finger path 16 that is used to measure the reach of the index finger. The index-finger path 16 may be continuous or piecewise continuous.

The step 1200 may be repeated for a plurality of fingers 22 according to step 1250, to measure the reach of a plurality of fingers 22 that the user intends to use while typing on the virtual keyboard 80;90.

The method may use either a tapping movement 18 or a sliding movement 19 to determine the reach of a finger. It is however to be understood that a combination of the tapping movement 18 and the sliding movement 19 may be used for determining a reach of a finger.

Thus, a similar tapping movement 18 or sliding movement 19 may be detected for each of the fingers of the right hand that the user intends to use when typing on the virtual keyboard. The tapping movement 18 or sliding movement 10 may be measured for all fingers of the right hand, including the thumb. A similar detection may thereafter be performed with the left hand of the user.

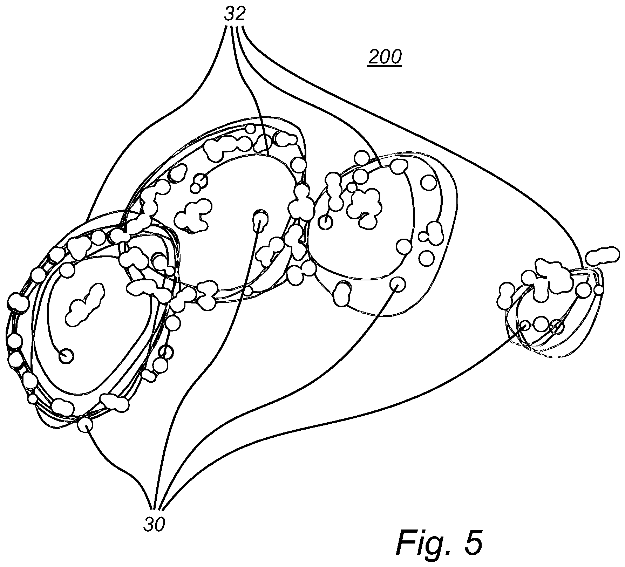

Fig. 5 schematically shows an example of determining a respective finger reach for a plurality of fingertips 22 of the right hand 100 of the user. Here, tapping data 30 and sliding data 32 have been registered by the computing device after both a tapping movement and a sliding movement has been detected, demonstrating the respective finger reach for the plurality of fingertips 22.

After 1200, including the possible repeating of 1250, the user may be prompted to hold each hand 100 in an initial typing position on the touch-sensitive surface 200.

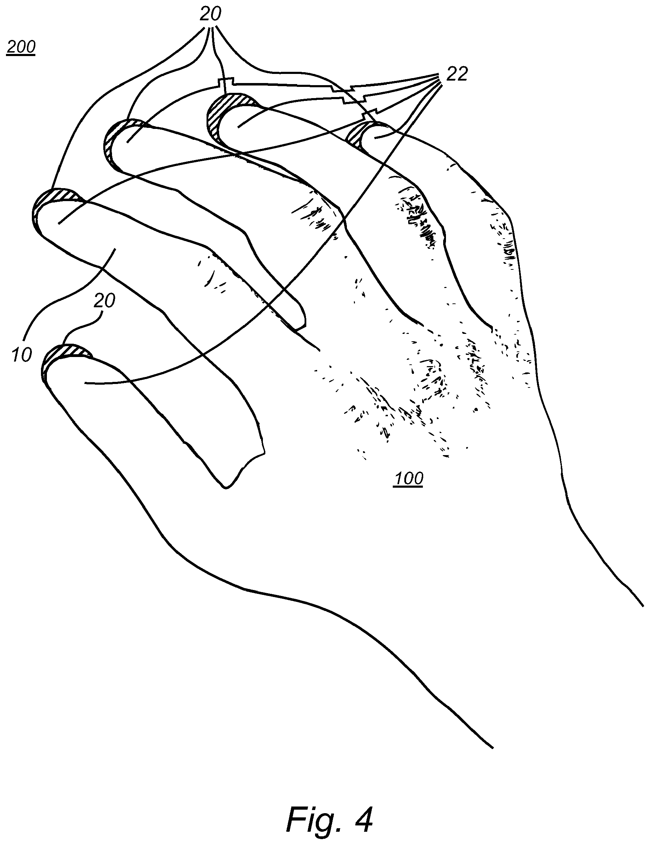

Fig. 4 shows the right hand 100 of the user, held in a neutral position having a plurality of fingertips 22 touching the touch sensitive surface 200 at a corresponding plurality of touching points 20. If the user is prompted to place one of the hands on the touch sensitive surface 200, it is suggested that the fingers are held slightly bent, as well as having the wrist associated with the hand substantially straight, as shown in Fig. 4. Respective touching point 20 may correspond to the previously described respective point. The plurality of touching points 20 of the plurality of fingertips 22 may, at least approximately, be used as a set of coordinates in a home row 872 of virtual keys for the virtual keyboard. By holding the hand in such a neutral position, each finger may reach a substantial distance in any direction around the respective touching point, depicted for the index finger 10 of the right hand 100 of the user in Fig. 2 and Fig. 3. Both hands of the user may be simultaneously placed in a neutral position on the touch sensitive surface 200 to determine an angle between the forearms of the user. Thus, the point 14 for each respective finger 10 may be defined based on the user holding the hand in a neutral position above said touch-sensitive surface 200.

Thus, a plurality of fingertip touching points 20 may be measured with said user holding each hand 100 on said touch-sensitive surface in an initial typing position.

As the skilled person would know per se, rendering and displaying a virtual keyboard is based on a set of geometrical parameters defining the geometry of the virtual keyboard.

At 1300 (Fig. 1), a set of geometrical parameters, defining a keyboard geometry, are calculated, based on the biometrical measurements performed in the previous steps 1100;1200;1250. Any one or any com bination of the biometrical measurement procedures outlined above is used for calculating a set of geometrical parameters defining the virtual keyboard.

Thereby, one or more of the distances between the keys, the size of the virtual keyboard, the shape/rotation/curvature of the virtual keyboard/the keys, etc. may be adapted based on the finger reach measurements, so that a larger finger reach, for example, may lead to larger distances between keys, and vice versa, as the skilled person would understand per se.

The calculating of the set of geometrical parameters may further be based on the measuring of said plurality of fingertip touching points according to the above.

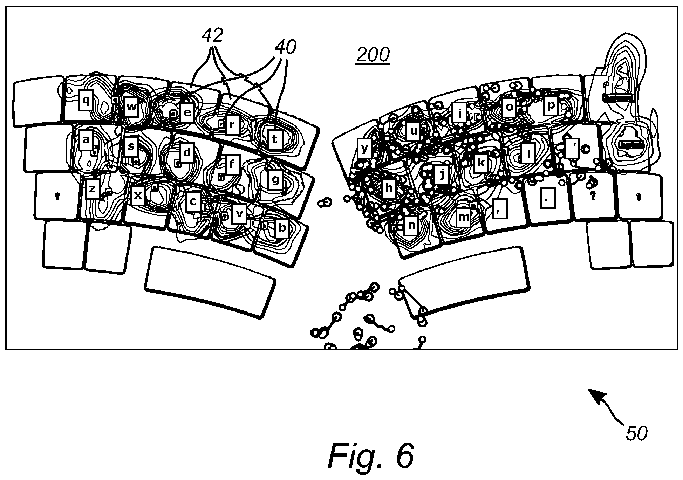

At 1400 (Fig. 1), a biometrically optimized virtual keyboard 80;90 is rendered on the touch-sensitive surface 200, based on the set of geometrical parameters calculated in step 1300. An example of such a rendered keyboard 50 is shown in Fig. 6.

For instance, if the user has relatively small hands, the biometrical measurement procedure determines that the sizes of the virtual keys are relatively small and separated accordingly, and that the virtual keyboard is thereby rendered accordingly, based on the set of geometrical parameters.

Optionally, at 1500 (Fig. 1), the user may be prompted to type a given text, which may be pre-defined, and/or originating from the user on the rendered virtual keyboard 50. For each character in the text typed by the user, a keystroke coordinate may be detected on the touch-sensitive surface 200. Still with reference to Fig. 6, based on the detecting of each keystroke coordinate 40 for each typed character, for each virtual key 42, a statistical parameter of the keystroke coordinates 40 associated with said virtual key.

For example, the statistical parameter may be an average. The statistical parameter may also be a standard deviation, or a variance.

In the example of Fig. 6, a heatmap 40 is calculated from a series of keystrokes of a respective virtual key 42. The heatmap 40 of a specific virtual key 42 is a probability distribution obtained from a series of keystroke coordinates associated with the specific virtual key. Such a series of keystroke coordinates is detected for each character in a text typed by the user. From the series of keystroke coordinates, an average position and a distribution for the respective character is determined, allowing to fine-tune the geometrical parameters defining the virtual keyboard 50.

Optionally, at 1600 (Fig. 1), the geometrical parameters may be fine-tuned, based on the typing in step 1500, to further optimize the virtual keyboard 80;90 to the user. Thereby, a correction to the set of geometrical parameters defining said virtual keyboard 80;90 is calculated based on the statistical parameter associated with each respective virtual key 42.

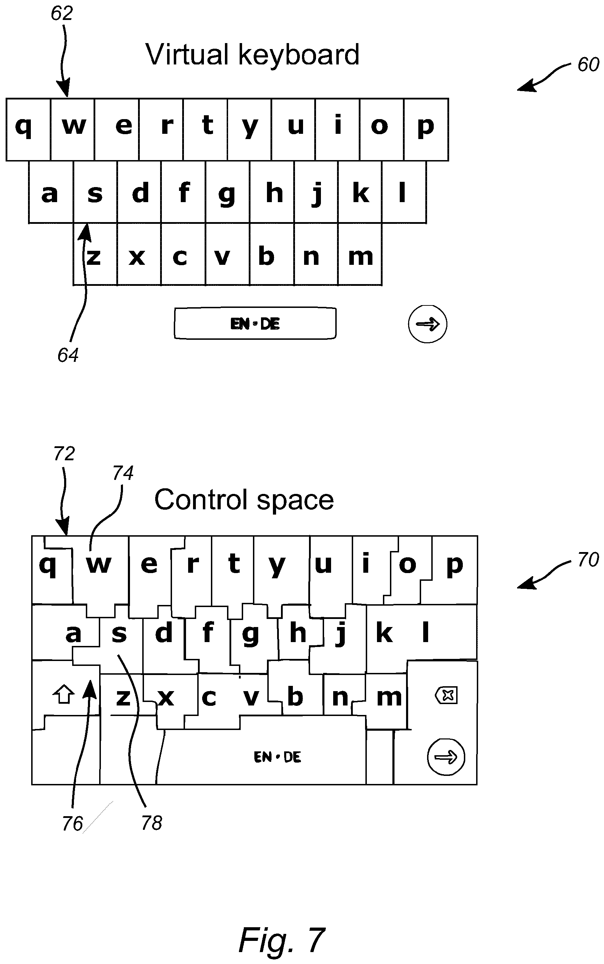

As exemplified Fig. 7, the determined heatmap of each respective character may be used to determine both the virtual keyboard 60 and a control space 70, overlaid on the virtual keyboard, wherein the virtual keyboard 60 is presented to the user, while the control space represents the areas for each character sensitive to user input on the touch-sensitive surface.

To simplify the presentation in Fig. 7, the virtual keyboard 60 and the control space 70 are here rendered as simplified non-optimized orthogonal virtual keyboards. However other keyboard layouts, as discussed elsewhere in this disclosure, are equally possible.

The size and the position of an individual virtual key in the visual virtual keyboard may however not correspond to the distribution of the heatmap of the individual virtual key. This heatmap information is contained in the control space 70. The area spanned by the pixels associated with the individual virtual key may differ in size, shape and position between different virtual keys between the virtual keyboard 60 and the control space 70.

Thus, the area, the shape, and the position of a virtual key may differ between the virtual keyboard 60 and the control space 70. As an example, this feature is highlighted for the letter "W" 62;72 in the virtual keyboard 60 and the control space 70 of Fig. 7.

Further, the control space 70 controls input registration from the user during typing. For instance, the user may, according to the determined individual heatmaps, repeatedly and incorrectly type the letter "S" 64 when supposed to type the letter "W" 62. In such a situation the pixel area 74 of the letter "W" 72 in the control space 70 may extend into an intended pixel area 78 of the letter "S" 76. The user may thereby be allowed to continue such an incorrect and subconscious typing behavior without experiencing any substantial amount of typing errors. The control space 70 is preferably invisible to the user, preventing an obtrusive and distractive rendering of the virtual keyboard 60. The control space 70 may be continuously updated during typing on the virtual keyboard 60 to account for possible changes in the user's typing behavior.

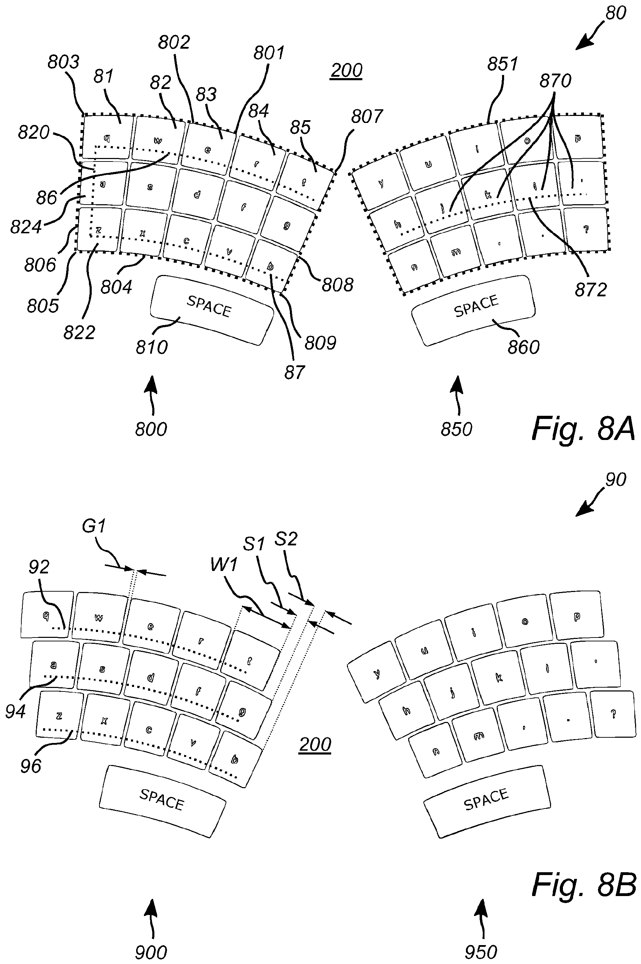

Turning to Fig. 8A and Fig. 8B there are shown two types of rendered virtual keyboard layouts 80;90. Temporarily referring to Fig. 8A, the virtual keyboard may be divided into a first virtual keyboard section 800 and a second virtual keyboard section 850. The first virtual keyboard section 800 is associated with a first hand of the user. The second virtual keyboard section 850 is associated with a second hand of the user. In the event that a QWERTY virtual keyboard layout is considered, an example of a row 86 of virtual keys may comprise the letters "Q" 81, "W" 82, "E" 83, "R" 84 and "T" 85. Each row of virtual keys of a respective virtual keyboard section 800;850 may be curved. The curvature of a respective curve is determined by the set of geometrical parameters. The curves defining the curvature of respective virtual keyboard section 800;850 may be a set of Bezier curves. The geometry of the outer boundary 801 of the first virtual keyboard section 800 may be a curved polygon comprising a first quadratic Bezier curve 802 above a top row 86 of virtual keys, and a second quadratic Bezier curve 804 below a bottom row 87 of virtual keys. A first end 803 of the first quadratic Bezier curve 802 and a first end 805 of the second quadratic Bezier curve 804 are interconnected by a first straight line 804. A second end 807 of the first quadratic Bezier curve 802 and a second end 809 of the second quadratic Bezier curve 804 are interconnected by a second straight line 808. The first straight line 806 and the second straight line 808 are preferably not parallel. The geometry of the outer boundary 851 of the second virtual keyboard section 850 is preferably mirror symmetric to the geometry of the outer boundary 801 of the first virtual keyboard section 800. Each quadratic Bezier curve 802;804 is defined by three control points.

The "SPACE" key 810;860 of the virtual keyboard 80 may be divided into a first space-key part 810 and a second space-key part 860 such that the first space-key part 810 is associated with the first hand of the user and the second space-key part 860 is associated with the second hand of the user.

Other types of curves defining the curvature are equally possible without departing from the scope of protection. For instance, in the event that the virtual keyboard is divided into a first virtual keyboard section 800 and a second virtual keyboard section 850 as depicted in Fig. 8A and Fig. 8B, the virtual keys in a certain row of virtual keys may substantially be aligned along an arc in a polar or an elliptic coordinate system. The two virtual keyboard sections 800;850 may then be conveniently defined by two separate polar or elliptic coordinate systems. The curves defining the curvature may be straight lines. In such a case, the first straight line 806 and the second straight line 808 are substantially parallel.

Fig. 8A shows a so-called non-staggered keyboard layout. In the event that a flat curvature of each row of virtual keys is considered, this layout may be referred to as an orthogonal, an ortholinear or a matrix-stagger layout. For such a layout, each column of virtual keys is aligned along a substantially straight line, suitable for, e.g. a normal number pad. In the event that a QWERTY virtual keyboard layout is considered, as that of Fig. 8A, an example of a column of virtual keys 820 may comprise the letters "Z" 822, "A" 824 and "Q" 81. All letters of the non-staggered keyboard layout of the virtual keyboard are preferably substantially similarly sized.

Fig. 8B shows a staggered keyboard layout 90. Here, adjacent rows 92;94;96 of virtual keys are relatively shifted compared to the non-staggered keyboard layout 80 of Fig. 8A. A staggered keyboard layout 90 is commonly occurring among normal physical keyboards and is considered a preferred keyboard layout by most touch typists. As an example, a middle row 94 of the first keyboard section 900 may be right shifted approximately 25% S1 of the width W1 of a virtual key relative to a top row 92 of the first keyboard section 900. A similar shifting may be employed for other adjacent rows of virtual keys, i.e. a bottom row 96 of the first keyboard section 900 may be right shifted approximately 25% S2 of the width W1 of a virtual key relative to the middle row 94 of the first keyboard section 900. In this example S1 = S2 = 0.25xW1. This is referred to as equal stagger. Any other reasonable shifting between adjacent rows of virtual keys is possible within the scope of protection. For instance, the bottom row 96 of virtual keys may be right shifted approximately 50% of the width W1 of a virtual key relative to the middle row 94 of virtual keys, i.e. S2 = 0.5xW1. This is referred to as normal stagger, and commonly occurring among physical QWERTY keyboards. For a QWERTY virtual keyboard layout the top row 92 of virtual keys may comprise the letters "Q", "W", "E", "R" and "T", the middle row 94 of virtual keys may comprise the letters "A", "S", "D", "F" and "G", and the bottom row 96 of virtual keys may comprise the letters "Z", "X", "C", "V" and "B". While utilizing the method, the user may optionally choose a preferred virtual keyboard layout, for instance between a non-staggered 80 and a staggered 90 layout.

The virtual keyboard 80;90 is preferably statically located on the touch sensitive surface 200. All letters of the staggered keyboard layout 90 of the virtual keyboard 80;90 are preferably substantially similarly sized, except for, e.g. the "SPACE" button 810;860.

The method further allows the user to manually adjust various virtual keyboard preferences, such as virtual keyboard layout and language, e.g. QWERTY or Dvorak, displaying or hiding additional rows, e.g. a number row, a degree of staggering described above, various styles such as width of gaps G1 between virtual keys, colors, curvature of the corners of the virtual keys, or the like.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for biometrically optimizing a virtual keyboard (60; 70; 80;90) on a touch sensitive surface (200) for a user, said method comprising:
determining (1200) a respective finger reach for each of a plurality of fingers (10) of said user by a biometrical measurement procedure comprising, for each respective finger (10), measuring said finger reach based on detecting a finger-reach gesture (18;19) with a fingertip (11) of said finger (10) around a respective point (14) on said touch-sensitive surface (200);
calculating (1300) a set of geometrical parameters defining said virtual keyboard (60; 70; 80;90) based on said biometrical measurement procedure;
rendering (1400) said virtual keyboard (60; 70; 80;90) on said touch-sensitive surface (200) based on said set of geometrical parameters.

2. The method of claim 1, wherein said finger-reach gesture (18;19) comprises a tapping movement (18) with the respective fingertip (11) around said respective point (14).

3. The method of claim 1, wherein said finger-reach gesture (18;19) comprises a sliding movement (19) with the respective fingertip around said respective point (14).

4. The method of any one of the preceding claims, wherein the point (14) for each respective finger is defined based on said user holding the hand in a neutral position above said touch-sensitive surface (200).

5. The method of any one of the preceding claims, further comprising, after said rendering:
for each character in a text typed by said user, detecting a keystroke coordinate on said touch-sensitive surface (200);
based on said detecting of each said keystroke coordinate (40) for each said character, for each virtual key (42), calculating a statistical parameter of the keystroke coordinates (40) associated with said virtual key;
calculating a correction to said set of geometrical parameters defining said virtual keyboard (60; 70; 80;90) based on the statistical parameter associated with each respective virtual key (42).

6. The method of claim 5, wherein said statistical parameter is an average.

7. The method of any one of the preceding claims, further comprising, after said determining, and before said calculating of said set of geometrical parameters:
measuring a plurality of fingertip touching points (20) with said user holding each hand (100) on said touch-sensitive surface in an initial typing position,
wherein said calculating of said set of geometrical parameters further is based on said measuring of said plurality of fingertip touching points.

8. The method of any one of the preceding claims, wherein said set of geometrical parameters describe said virtual keyboard being divided into a first virtual keyboard section (800;900) and a second virtual keyboard section (850;950), said first virtual keyboard section (800;900) being associated with a first hand of said user, and said second virtual keyboard (850;950) section being associated with a second hand of said user.

9. The method of any one of the preceding claims, wherein said set of geometrical parameters describe a curvature for each row (86) of said virtual keyboard (200).
